(19) Europäisches Patentamt
European Patent Office
Office européen des brevets

(11) Veröffentlichungsnummer: **0 201 787 A2**

(12) # EUROPÄISCHE PATENTANMELDUNG

(21) Anmeldenummer: **86105794.1**

(51) Int. Cl.⁴: **C08G 81/02**

(22) Anmeldetag: **26.04.86**

(30) Priorität: **04.05.85 DE 3516070**

(43) Veröffentlichungstag der Anmeldung: **20.11.86 Patentblatt 86/47**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Seiler, Erhard, Dr.**
**Erpolzheimer Strasse 1**
**D-6700 Ludwigshafen(DE)**
Erfinder: **Hambrecht, Juergen, Dr.**
**Am Klosterwald 31**
**D-4400 Muenster-Hiltrup(DE)**

(54) **Copolymeres mit Styrol-Acrytnitril-Copolymeren in der Hauptkette und über Benzylbrücken gebundenen Polymerisaten in der Seitenkette (Kammpolymere).**

(57) Die Erfindung betrifft Copolymere mit Durchschnittsmolekulargewichten (Gewichtsmittel $\overline{M}_w$) von 10 000 bis 2 Millionen, die Struktureinheiten der allgemeinen Formeln I, II und III in den nachfolgend genannten Bereichen in Mol.%, bezogen auf das Copolymere, einpolymerisiert enthalten

I 40 bis 90 Mol.% der Einheit

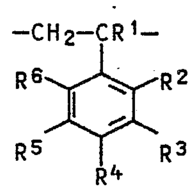

II 10 bis 60 Mol.% der Einheit

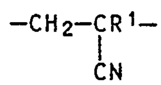

und

III 0,01 bis 10 Mol.% der Einheit

EP 0 201 787 A2

Rank Xerox

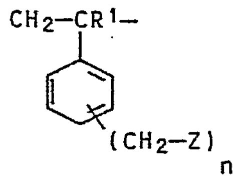

wobei stehen für $R^1$ bis $R^6$ = Wasserstoff oder $C_1$-bis $C_8$-Alkylreste; n = 1, 2 oder 3 und wobei der Rest Z ein durch anionische Polymerisation mit vorzugsweise Lithiumverbindungen hergestelltes Polymerisat mit Durchschnittsmolekulargewichten (Gewichtsmittel $\overline{M}_w$) von 2000 bis 1 Million darstellt.

Die Copolymeren werden zur Herstellung von Mischungen mit anderen Polymeren oder zur Herstellung von Formteilen verwendet.

# Copolymeres mit Styrol-Acrylnitril-Copolymeren in der Hauptkette und über Benzylbrücken gebundenen Polymerisaten in der Seitenkette (Kammpolymere)

Die Erfindung betrifft Kammpolymere mit S/AN-Copolymerisaten in der Hauptkette und anionisch erzeugten Polymerisaten als Seitenkette.

Zum Stand der Technik nennen wir

(1)Deutsche Patentanmeldung P 34 44 788.1 -O.Z. 37 486,

(2)Deutsche Patentanmeldung P 34 44 787.3 -O.Z. 37 487 und

(3)Deutsche Patentanmeldung P 34 31 268.4 -O.Z. 37 292.

In (1) und (2) sind Kammpolymere mit Struktureinheiten der allgemeinen Formel

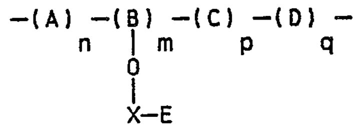

beschrieben.

Sie setzen sich zusammen aus den polymeren Einheiten der Hauptkette der allgemeinen Formel

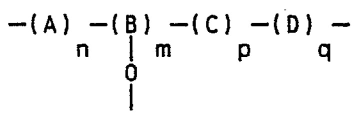

wobei X = der Rest eines bifunktionellen Kopplungsmittels aus einer organischen oder anorganischen Verbindung und E = durch anionische Polymerisation erhaltene Styrolcopolymere oder Dien-Polymere sind.

In (3) sind Kammpolymere beschrieben, die Poly(phenylenether) in der Seitenkette enthalten, wobei die Seitenketten über Benzylbrücken etherartig mit den Hauptketten verbunden sind.

Nachteilig ist die relativ aufwendige Herstellung und die geringe Hydrolysestabilität der aus (1) oder (2) bekannten Kammpolymeren. Aufgabe war es, Kammpolymere zu finden, die diese Nachteile nicht zeigen.

Die Lösung der Aufgabe gelingt durch Kammpolymere gemäß Patentanspruch 1.

Die Erfindung betrifft daher Copolymere mit Durchschnittsmolekulargewichten (Gewichtsmittel $\overline{M}_w$) von 10 000 bis 2 Millionen, die Struktureinheiten der allgemeinen Formeln I, II und III in den nachfolgend genannten Bereichen in Mol.%, bezogen auf das Copolymere aus I bis III, einpolymerisiert enthalten

I 40 bis 90 Mol.% der Einheit

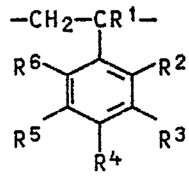

II 10 bis 60 Mol.% der Einheit

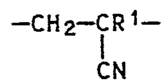

und

III 0,01 bis 10 Mol.% der Einheit

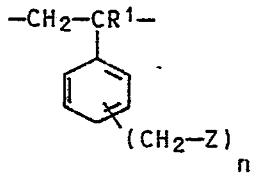

wobei stehen für $R^1$ bis $R^6$ = Wasserstoff oder $C_1$-bis $C_8$-Alkylreste; n = 1, 2 oder 3 und wobei der Rest Z ein durch anionische Polymerisation mit vorzugsweise Lithiumverbindungen hergestelltes Polymerisat mit Durchschnittsmolekulargewichten - (Gewichtsmittel $\overline{M}_w$) von 2000 bis 1 Million darstellt.

Nachstehend wird der Aufbau des erfindungsgemäßen Copolymeren aus den Struktureinheiten sowie die Herstellung derselben beschrieben.

Das Copolymere ist aufgebaut aus den Struktureinheiten I, II und III bzw. es enthält diese einpolymerisiert und zwar in folgenden Anteilen:

40 bis 90 Mol.%, vorzugsweise 45 bis 70 Mol.% der Einheit I

10 bis 60 Mol.%, vorzugsweise 30 bis 50 Mol.% der Einheit II

0,01 bis 10 Mol.%, vorzugsweise 0,02 bis 5 Mol.% der Einheit III.

Das erfindungsgemäße Copolymere kann darüber hinaus noch 1 bis 20 Mol.%, vorzugsweise 3 bis 10 Mol.% Struktureinheiten IV aufweisen ($\Sigma$ der Struktureinheiten Mol.% = 100).

Die erfindungsgemäßen Polymeren weisen durchschnittliche Gesamtmolekulargewichte - (Gewichtsmittel $\overline{M}_w$) von 10.000 bis 2.000.000, bevorzugt 20.000 bis 100.000 auf, wobei das Molekulargewicht jeweils gemessen wurde durch Gelpermeationschromatographie in 0,25 gew.%iger Tetrahydrofuranlösung bei 23°C und einer Durchflußgeschwindigkeit von 1,2 ml/min (vgl. G. Glöckner, "Polymercharakterisierung durch Flüssigkeits-Chromatographie", Verlag A. Hüttig, Heidelberg, 1982).

Die neuen Copolymeren enthalten Struktureinheiten bzw. Strukturelemente der eingangs gekennzeichneten allgemeinen Formeln I, II und III einpolymerisiert. Es handelt sich bei den Copolymeren um makromolekulare Stoffe, die ganz oder im wesentlichen oder teilweise aus wiederkehrenden Einheiten der Formeln I, II und III bestehen, worin der Formelteil $\{ CH_2\text{-}CR^1 \}$ ein Teil der Polymerkette ist. Die Copolymeren enthalten in den Seitenketten als Substituenten die -Ar $( CH_2\text{-}Z)_n$ und CN-Reste. Die erfindungsgemäßen Copolymeren bestehen entweder aus Copolymeren, welche nur die oben aufgeführten Struktureinheiten I, II und III enthalten oder aus Copolymeren, die neben den Struktureinheiten I, II und III noch andere Strukturelemente enthalten, die sich von anderen copolymerisierbaren olefinisch ungesättigten Verbindungen ableiten (Einheit IV). Alle einpolymerisierten Struktureinheiten können statistisch, d.h. beliebig über die Hauptkette verteilt, alternierend und/oder blockartig im Copolymeren der Hauptkette verteilt sein. Derartige Anordnungen von Monomereinheiten in Copolymeren sind an sich bekannt, so daß sich eine weitere Erläuterung erübrigt.

In der Struktureinheit der allgemeinen Formel I

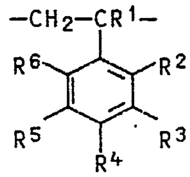

I

bedeutet $R^1$ = Wasserstoff oder einen $C_1$-bis $C_8$-Alkylrest, insbesondere Wasserstoff oder einen Methylrest und $R^2$ bis $R^6$ = Wasserstoff, $C_1$-bis $C_8$-Alkyl, insbesondere Wasserstoff oder Methyl. Die Monomeren der Einheit I enthalten keine Chlormethylgruppen. Besonders geeignet zum Aufbau von I sind Styrol, α-Methylstyrol und Vinyltoluol. Die Einheit der allgemeinen Formel I ist in den Copolymeren bevorzugt in Mengen von 40 bis 95 Gew.%, enthalten. Ein besonders bevorzugtes Copolymeres besteht aus 50 bis 89,5 Gew.% der Einheit I, 10 bis 35 Gew.% der Einheit II und 0,5 bis 10 Gew.% der Einheit III.

Bei der in den polymeren Einheiten der Hauptkette vorhandenen Einheit II

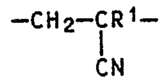

II

handelt es sich um einpolymerisierte, Nitrilgruppen enthaltende Monomere, wobei $R^1$ = H oder ein $C_1$-bis $C_8$-Alkylrest, bevorzugt H oder $CH_3$, d.h. bevorzugt handelt es sich um Acrylnitril oder Methacrylnitril. Die Struktureinheit der allgemeinen Formel II ist in den erfindungsgemäßen Polymeren bevorzugt in Mengen von 1 bis 40 Gew.%, vorzugsweise 10 bis 35 Gew.%, enthalten.

In der Struktureinheit III

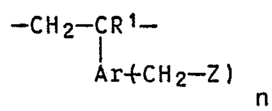

III

bedeutet $R^1$ Wasserstoff oder einen $C_1$-bis $C_8$-Rest, bevorzugt ist Wasserstoff oder ein Methylrest. Der Formelteil Ar bedeutet einen gegebenenfalls mit Alkyl-und/oder Arylresten substituierten aromatischen Rest mit 6 bis 14 C-Atomen, wobei ein Phenylrest bevorzugt ist. Bevorzugt sind ein oder zwei (Z-$CH_2$)-Reste im aromatischen Rest Ar vorhanden (n = 1, 2, maximal 3). Der in der Seitenkette der Struktureinheit I befindliche Formelteil Z bedeutet dabei ein Polymerisat oder Copolymerisat das durch anionische Polymerisation hergestellt worden ist. Dieses (Co)Polymerisat Z weist Molekulargewichte (Gewichtsmittel $\overline{M}_w$), bestimmt nach der vorstehend angegebenen Methode, von 2.000 bis 1 Million, insbesondere von 5.000 bis 100.000, vorzugsweise von 10.000 bis 80.000 auf.

Die Seitenketten bestehen bevorzugt aus

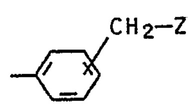

wobei für Z beispielhaft die durch anionische Polymerisation gewonnenen Polymeren genannt seien. Diese bestehen bevorzugt aus Styrol, α-Methylstyrol, Vinyltoluol, Butadien, Isopren und 2,3-Dimethylbutadien. Die anionische Polymerisation wird bekanntermaßen vorzugsweise durch OrganoLithiumverbindungen, wie sec.-Butyl-Lithium, gestartet. Die anionischen Polymeren können Homopolymerisate oder Copolymerisate sein, wobei die Copolymeren statistisch oder blockartig aufgebaut sein können. Solche Polymere sind von M. Szwarc in "Advances in Polymer Science", No. 49, S. 1-181, Springer-Verlag Berlin 1983 und L.J. Fetters, "Advances in Polymer Science", No. 56, S. 1-90, 1984, beschrieben. Besonders bevorzugt sind Polymere Z, die vorwiegend oder ausschließlich Styrol enthalten.

Die Struktureinheit der allgemeinen Formel III ist in den erfindungsgemäßen Polymeren bevorzugt in Mengen von 0,05 bis 99, besonders bevorzugt von 0,5 bis 20 Gew.% enthalten.

Der Gewichtsanteil an Polymeren Z im erfindungsgemäßen Copolymeren beträgt 5 bis 95, bevorzugt 20 bis 80 Gew.%.

Die Struktureinheit III leitet sich aus einem Umsetzungsprodukt aus insbesondere Chlormethylstyrol, besonders bevorzugt von dem eines Gemisches aus m-Chlormethylstyrol und p-Chlormethylstyrol und einem durch anionische Polymerisation erhaltenen Polymeren Z ab, wobei letzteres mit funktionellen Li-oder anderen reaktiven Gruppen versehen ist.

Das erfindungsgemäße Copolymere kann zusätzlich noch die Struktureinheit IV

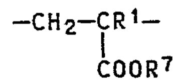

aufweisen, wobei $R^1$ = Wasserstoff oder einen $C_1$-bis $C_8$-Alkylrest und $R^7$ einen $C_1$-bis $C_{12}$-Alkyl-oder Cycloalkylrest darstellen. Bevorzugt wird Methylmethacrylat zum Aufbau der Struktureinheit IV verwendet.

Bei den bevorzugten Copolymeren gemäß der Erfindung handelt es sich um makromolekulare Stoffe, bei denen an Styrol-und Acrylnitril-Hauptketten Seitenketten gebunden sind, die durch anionische Polymerisation hergestellt wurden. Im besonderen bestehen die Seitenketten aus Polystyrol. Die Polymeren eignen sich als Verträglichmacher von SAN bzw. ABS mit Polyphenylenoxid.

Herstellung der erfindungsgemäßen Copolymeren

Die erfindungsgemäßen Polymeren können auf verschiedenen Wegen hergestellt werden (vgl. insbes. (3) und die dort genannte Literatur).

Das erfindungsgemäße Copolymere wird bevorzugt hergestellt, indem man Monomere copolymerisiert, so daß sie die Struktureinheiten I, II und III (gegebenenfalls IV) enthalten. Die Copolymerisation erfolgt dabei nach den dem Fachmann bekannten Methoden. Bevorzugt werden die Monomeren durch kontinuierliche radikalische Polymerisation in Lösung oder Masse hergestellt. Die erhaltenen Polymeren, die die Hauptkette bilden und die eine an einen Phenylkern gebundene Chlormethyl-oder Brommethyl-Gruppe enthalten, werden mit dem durch anionische Polymerisation erhaltenen Polymeren Z umgesetzt. Das durch anionische Polymerisation erhaltene Polymere mit dem "lebenden" Anion am Kettenende wird dabei vorzugsweise bei tiefer Temperatur mit der Halogenmethylgruppe der Struktureinheit III im oben beschriebenen Polymeren umgesetzt. Es ist jedoch auch möglich, das "lebende" Anion mit Ethylenoxid oder Propylenoxid umzusetzen und das entstehende Alkoholat bei vorzugsweise erhöhter Temperatur mit dem Halogenmethyl-gruppenhaltigen Polymeren der Hauptkette umzusetzen.

Ein bevorzugtes Verfahren zur Herstellung von Copolymeren gemäß Anspruch 1 besteht somit darin, daß das Copolymere hergestellt wird durch Umsetzung eines Polymeren mit Struktureinheiten der allgemeinen Formel in den folgenden Proportionen:

40 bis 90 Mol.% von I

10 bis 60 Mol.% von II und

0,01 bis 10 Mol.% von

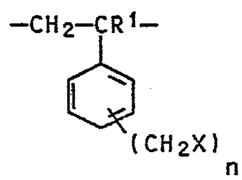

mit dem Living Anion Z-($Li^+$), welches nach der anionischen Polymerisation erhalten wird oder mit dem endverschlossenen anionisch erzeugten Polymeren Z-$CH_2$-$CHR_8$-OH, wobei $Z^-$ ein durch anionische Polymerisation hergestelltes Polymeres und $R_8$ = H oder $C_1$-bis $C_{20}$-Alkyl und X = Halogen, bevorzugt Brom oder Chlor und n = 1, 2 oder 3, vorzugsweise 1, ist.

Die erfindungsgemäßen Copolymeren können in der üblichen Weise modifiziert werden. Sie können daher z.B. Verstärkungs-und Füllstoffe, insbesondere Glasfasern, Flammschutzmittel, Stabilisatoren, Gleit-und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calciniertes Aluminiumsilikat eingesetzt werden.

Sie können auf herkömmlichen Maschinen durch Formblasen, Extrusion oder Spritzguß verarbeitet werden. Sie können als thermoplastische Kautschuke, Werkstoffe, Schmelzkleber, Mineralöladditive und zur Herstellung photopolymerer Druckplatten eingesetzt werden. In Kombination mit anderen Thermoplasten können sie zur Verbesserung der Zähigkeit, wie Schlagzähigkeit, Fließeigenschaften und des Oberflächenbildes verwendet werden.

Die erfindungsgemäßen Copolymeren können bevorzugt als Verträglichmacher bei Polymerblends, insbesondere für Mischungen aus S/AN, ABS und PPE, eingesetzt werden.

Für die Herstellung der erfindungsgemäßen Copolymeren wurden die nachfolgend beschriebenen Produkte verwendet:

I.Herstellung von Polymeren, die nur eine Hauptkette aufweisen

Produkt A

Eine Mischung aus 60,5 Gew.-Teilen Styrol, 35 Gew.-Teile Acrylnitril, 3 Gew.-Teile m-Chlormethylstyrol, 2 Gew.-Teile p-Chlormethylstyrol und 20 Gew.-Teile Ethylbenzol werden kontinuierlich in einen Kessel mit Rührer von oben dosiert. Die gleiche Menge wird gleichzeitig aus dem Kessel kontinuierlich entnommen. Die Dosierung wird so eingestellt, daß sich eine mittlere Verweilzeit von 6 h einstellt. Die Monomeren werden bei 150°C und 7 bar Druck kontinuierlich thermisch ohne Starterzusatz polymerisiert. Die kontinuierlich ausgetragene Mischung wird über einen Extruder entgast, das als Strang ausgetragene Polymere wird granuliert. Man erhält ein statistisch verteiltes Copolymeres mit $\overline{M}_w$ = 31.500.

Produkt B

Durch thermische kontinuierliche Copolymerisation (gemäß A) von 69 Gew.-Teilen Styrol, 20 Gew.-Teilen Acrylnitril, 5 Gew.-Teile Methylmethacrylat, 3,6 Gew.-Teile m-Chlormethylstyrol, 2,4 Gew.-Teile p-Chlormethylstyrol und 35 Gew.-Teile Ethylbenzol stellt man bei 150°C und 8 bar bei 7,5 h Verweilzeit ein statistisch verteiltes Copolymeres mit $\overline{M}_w$ = 48.000.

Produkt C

Durch thermische kontinuierliche Copolymerisation (gemäß A) von 58 Gew.-Teilen p-Methylstyrol, 39 Gew.-Teilen Acrylnitril, 1,8 Gew.-Teilen m-Chlormethylstyrol, 1,2 Gew.-Teilen p-Chlormethylstyrol und 20 Gew.-Teilen Ethylbenzol stellt man bei 160°C und 9 bar bei 6,5 h Verweilzeit ein statistisch verteiltes Copolymeres mit $\overline{M}_w$ = 67.000.

II.Herstellung von Polymeren der Nebenkette

Produkt $N_1$

In einem 10 l-Rührkessel werden 5000 g Toluol und 1040 g Styrol unter $N_2$-Atmosphäre und unter Ausschluß jeglicher Feuchtigkeit vorgelegt und anschließend auf 45°C erwärmt. Zur Beseitigung der Verunreinigungen wird die Reaktionslösung portionsweise (5 ml) mit dem Initiator (sek.-Butyllithium, 1,2 gew.%ig in Pentan) versetzt, bis ein Temperaturanstieg um ca. 0,5°C das Einsetzen der Polymerisation anzeigt. Durch unverzügliche Zugabe von 110 mMol sek.-Butyllithium wird die Reaktion gestartet, die Kesselheizung wird auf 60°C eingestellt. Man polymerisiert 1 h und kühlt auf 45°C. Man entnimmt eine Probe, die ein $\overline{M}_w$ = 10.800 zeigt.

Produkt $N_2$

In einem 10 l-Rührkessel werden 5000 g Toluol und 1040 g Styrol mit 120 mMol sek.-Butyllithium gemäß $N_1$ umgesetzt. Man polymerisiert 1 h bei 60°C. Anschließend setzt man 115,7 g Butadien

zu. Die Innentemperatur steigt auf 70°C an. Man polymerisiert 2 h bei 70°C und kühlt auf 45°C. Man entnimmt eine Probe, die ein $\overline{M}_w$ = 96.000 zeigt.

Produkt $N_3$

In einem 10 l-Rührkessel werden 5000 g Toluol und 1040 g Styrol mit 35 mMol sek.-Butyllithium gemäß $N_1$ umgesetzt. Man polymerisiert 1 h bei 60°C. Anschließend setzt man 261 g Butadien zu. Die Innentemperatur steigt auf 78°C an. Man polymerisiert 2 h bei 70°C und kühlt auf 45°C. Man entnimmt eine Probe, die ein $\overline{M}_w$ = 36.000 zeigt.

Die Erfindung wird nachstehend anhand von Beispielen näher erläutert.

100 g der Hauptkettenpolymeren A, B oder C werden in 0,8 l trockenem THF gelöst. Man versetzt bei 50°C langsam mit 1 l trockenem Toluol und destilliert anschließend 1,3 l Lösungsmittel ab. Man versetzt mit 1,5 l trockenem THF und anschließend bei 45°C mit 5 mMol sek.-Butyllithium - (3,6 %ig in Pentan).

Zu der Lösung tropft man unter starkem Rühren in 20 min die toluolische Lösung (Menge siehe Tabelle) der Seitenkettenpolymeren $N_1$, $N_2$ oder $N_3$. Man erwärmt in 30 min auf 60°C und fügt 15 ml einer 3,6 %igen Lösung von sek.-Butyllithium zu. Die Reaktionsmischung wird in Methanol gefällt, gewaschen und im Vakuum bei 60°C getrocknet.

Die erhaltenen mittleren Gesamtmolekulargewichte, $\overline{M}_w$, sind in der Tabelle angegeben.

Tabelle

| Beispiel Nr. | Hauptkettenpolymeres Menge in [g] | Hauptkettenpolymeres Art | Seitenkettenpolymeres Menge in [g] | Seitenkettenpolymeres Art | Copolymeres $\overline{M}_w$ |
|---|---|---|---|---|---|
| 1 | 100 | A | 100 | $N_1$ | 109.000 |
| 2 | 100 | A | 50 | $N_1$ | 74.000 |
| 3 | 100 | A | 100 | $N_2$ | 101.000 |
| 4 | 100 | A | 65 | $N_3$ | 160.000 |
| 5 | 100 | B | 80 | $N_2$ | 110.000 |
| 6 | 100 | B | 30 | $N_3$ | 86.000 |
| 7 | 100 | C | 110 | $N_1$ | 142.000 |
| 8 | 100 | C | 70 | $N_2$ | 105.000 |
| 9 | 100 | C | 10 | $N_3$ | 79.000 |
| 10 | 100 | C | 100 | $N_3$ | vernetzt |

## Ansprüche

1. Copolymere mit Durchschnittsmolekulargewichten (Gewichtsmittel $\overline{M}_w$) von 10 000 bis 2 Millionen, die Struktureinheiten der allgemeinen Formeln I, II und III in den nachfolgend genannten Bereichen in Mol.%, bezogen auf das Copolymere aus I bis III, einpolymerisiert enthalten

I 40 bis 90 Mol.% der Einheit

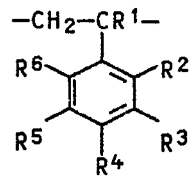

II 10 bis 60 Mol.% der Einheit

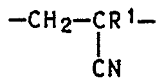

und

III 0,01 bis 10 Mol.% der Einheit

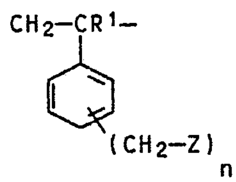

wobei stehen für $R^1$ bis $R^6$ = Wasserstoff oder $C_1$-bis $C_8$-Alkylreste; n = 1, 2 oder 3 und wobei der Rest Z ein durch anionische Polymerisation mit vorzugsweise Lithiumverbindungen hergestelltes Polymerisat mit Durchschnittsmolekulargewichten (Gewichtsmittel $_w$) von 2000 bis 1 Million darstellt.

2. Copolymeres nach Anspruch 1, <u>dadurch gekennzeichnet</u>, daß n = 1 ist.

3. Copolymeres nach Anspruch 1, <u>dadurch gekennzeichnet</u>, daß dieses zusätzlich zu den Struktureinheiten I bis III noch 1 bis 20 Mol.%, bezogen auf das Copolymere aus I bis IV, der Struktureinheit

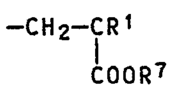

IV

einpolymerisiert enthalten, wobei $R^7$ steht für $C_1$-bis $C_{12}$-Alkyl oder Cycloalkyl.

4. Copolymeres nach Anspruch 1, <u>dadurch gekennzeichnet</u>, daß das Polymerisat Z ein Durchschnittsmolekulargewicht von 5.000 bis 100.000 bei Gesamtmolgewichten des Polymeren von 20.000 bis 400.000 aufweist und daß ferner das Polymerisat Z mindestens ein Monomeres ausgewählt aus der Gruppe von Styrol, α-Methylstyrol, p-Methylstyrol, Vinyltoluol, Butadien, Isopren, 2,3-Dimethylbutadien oder Gemischen davon einpolymerisiert enthält.

5. Verwendung von Copolymeren nach Anspruch 1 zur Herstellung von Mischungen mit anderen Polymeren.

6. Verwendung von Copolymeren nach Anspruch 1 zur Herstellung von S/AN-Copolymerisat/Polyphenylenethermischungen.

7. Verwendung von Copolymeren gemäß Anspruch 1, gegebenenfalls in Mischung mit anderen Polymeren, zur Herstellung von Formteilen.

8. Formteile enthaltend Copolymere gemäß Anspruch 1.